(19) Europäisches Patentamt
European Patent Office
Office européen des brevets

(11) **EP 4 491 254 A1**

(12) **EUROPEAN PATENT APPLICATION**

(43) Date of publication:
**15.01.2025 Bulletin 2025/03**

(21) Application number: **23185607.1**

(22) Date of filing: **14.07.2023**

(51) International Patent Classification (IPC):
**B01D 11/04** (2006.01)    **C22B 3/26** (2006.01)

(52) Cooperative Patent Classification (CPC):
**B01D 11/0488; B01D 11/0446; B01D 11/0492; C22B 3/26**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Université de Liège**
**4000 Liège (BE)**

(72) Inventor: **PFENNIG, Andreas**
**4860 Wegnez (BE)**

(74) Representative: **Winger**
**Mouterij 16 bus 101**
**3190 Boortmeerbeek (BE)**

(54) **SEPARATION PROCESS AND SYSTEM**

(57)    A continuous-flow process is provided for separating at least one component from a mixture of components. The mixture is provided in a counter-current flow comprising a first phase flowing in an opposite direction with respect to a second phase, the first phase being immiscible with and/or separated from the second phase. A plurality of stages are provided along the counter-current flow for exchanging the at least one component between the phases. Each stage is associated with a partition coefficient for each or the component between the first and second phase, and a first-to-second-phase flow rate ratio. The counter-current flow comprises, for each of the at least one component, an accumulation region. The partition coefficient and/or the flow rate ratio of stages at opposite sides of the accumulation region are adapted for inducing, at each of said stages, a net flux of the component along the counter-current flow, such that the direction of said net flux is opposite for stages at opposite sides of the accumulation region points towards the accumulation region. The component can then be removed from the accumulation region and from the counter-current flow.

$$\dot{G}_0, Y_{i,0} \quad Y_{i,1} \quad Y_{i,2} \quad Y_{i,3} \quad Y_{i,n-1} \quad Y_{i,n} \quad Y_{i,N-1} \quad Y_{i,N}$$

$$\boxed{S1} \quad \boxed{S2} \quad \boxed{S3} \quad \cdots \quad \boxed{Sn} \quad \cdots \quad \boxed{SN}$$

$$X_{i,1} \quad X_{i,2} \quad X_{i,3} \quad X_{i,4} \quad X_{i,n} \quad X_{i,n+1} \quad \dot{L}, X_{i,0}$$

FIG. 1A

**Description**

**Technical field of the invention**

The present invention relates to the field of separation techniques; in particular, to processes and systems for separating components from a mixture thereof.

**Background of the invention**

A range of techniques are known for individually separating components from a mixture comprising a plurality of components. Some of these techniques, such as liquid-liquid extraction (using e.g. extraction columns), make use of the different partition coefficients of different components between two different and immiscible phases, typically an organic phase and an aqueous phase. The partition coefficient may be tuned in different ways, for example, by selecting a particular organic phase, chelating agent or ligand, or tuning the pH of the aqueous phase. For example, the partition coefficient may be tuned in such a way that only one of the components is well-soluble in the organic phase, while the other components remain in the aqueous phase, thereby separating that one component from the other components.

As one example, such techniques are applied in the field of metallurgy, e.g., in hydrometallurgy and especially in urban mining, wherein an aqueous phase may contain an arbitrary number of metallic components that are to be separated from each other. An example is the leach liquor, or leach solution, from electronic waste, which may contain copper together with a wide variety of other metallic components. If the electronic waste contains mobile phones, the leach liquor may contain a wide range of rare-earth metals that are to be separated from each other.

In the state of the art, processes typically aim at stepwise separation of different components: the different components, e.g., metals, are separated in two fractions in each individual liquid-liquid extraction. A plurality of such liquid-liquid extractions are performed consecutively, which may yield the individual metallic components.

This process is, however, very tedious and cost- and labour-intensive. Furthermore, there is room for improving the purity of the separated components and/or reducing the effort to reach a defined purity of the separated components.

There is thus still a need in the art for systems and processes that address at least some of the above problems.

**Summary of the invention**

It is an object of the present invention to provide a good continuous-flow process. It is a further object of the present invention to provide a good continuous-flow system.

The above objective is accomplished by a process and system according to the present invention.

It is an advantage of embodiments of the present invention that simultaneous separation of multiple individual components from a mixture of components is possible.

It is an advantage of embodiments of the present invention that high concentration and purity for the separated components may be achieved.

It is an advantage of embodiments of the present invention that, as use is made of a continuous-flow process, the process may be efficient, e.g., have low labour costs and a high output. It is a further advantage of embodiments of the present invention that the process may be easily upscalable. It is a further advantage of embodiments of the present invention that the process can be adjusted to variations in the feed to the process. E.g., different compositions or an occurrence of an additional component or the disappearance of a component can be handled.

In a first aspect, the present invention relates to a continuous-flow process for separating at least one component from a mixture of components. The process comprises a step a) of providing the mixture in a counter-current flow comprising a first phase flowing in an opposite direction with respect to a second phase, the first phase being immiscible with and/or separate from the second phase. A plurality of stages are provided along the counter-current flow for exchanging the at least one component between the first and second phase. Each stage is associated with a partition coefficient for each of the at least one component between the first and second phase, and a first-to-second-phase flow rate ratio. The counter-current flow comprises, for each of the at least one component, an accumulation region, wherein the partition coefficient and/or the flow rate ratio of stages at opposite sides of the accumulation region are adapted for inducing, at each of said stages, a net flux of the component along the counter-current flow, such that the direction of said net flux is opposite for stages at opposite sides of the accumulation region and, for each of said stages, pointing towards the accumulation region, so as to accumulate the component at the accumulation region. Herein, the net flux corresponds to a difference between a flux of the component in the first phase and a flux of the component in the second phase at said stage. The process further comprises a step b) of removing each of the at least one component from the counter-current flow by removing the component from the respective accumulation region.

In embodiments, the continuous-flow process further comprises providing the counter-current flow, wherein providing the counter-current flow comprises providing the first phase being an organic phase and the second phase being an aqueous phase. It is an advantage of these embodiments that an aqueous phase, e.g., aqueous liquid, and an organic phase, e.g., organic liquid, may be immiscible. It is an advantage of these embodiments that the partition coefficient may be tuned by tuning the properties of the aqueous phase (e.g., pH).

In embodiments, providing the mixture in the counter-current flow comprises providing the mixture in the aqueous phase. In embodiments, removing each of the at least one component from the counter-current flow comprises removing each of the at least one component from the organic phase. It is an advantage of these embodiments that a good separation of the components may be obtained.

In embodiments, the process comprises providing a variation, e.g., gradient, of the partition coefficient for each component along the counter-current flow. It is an advantage of these embodiments that efficient techniques may be used for providing said variation of the partition coefficient, that may be compatible with existing counter-current systems.

By a variation of any parameter, e.g., the partition coefficient, a pH, a variable $\lambda_{i,n}$ as defined below, or a concentration of a partitioning agent, along the counter-current flow, one means a variation of the parameter, e.g., the partition coefficient, between, e.g., along, the stages. In other words, the parameter may be different for the different stages. Said variation may be continuous or may be discontinuous. The variation may be constant between consecutive stages along the counter-current flow, e.g. from a particular stage to a stage consecutive to the particular stage, or the variation may differ along the stages, e.g., between different consecutive stages along the counter-current flow. In other words, the difference in the parameter, e.g., the partition coefficient, between consecutive stages may be the same or may be different for each pair of consecutive stages along the counter-current flow. For example, a variation may be smaller, greater or the same between two consecutive stages than between two other consecutive stages. Preferably, the parameter, e.g., the partition coefficient, either increases along substantially the complete counter-current flow, or decreases along substantially the complete counter-current flow, but this is not essential.

In embodiments, providing the variation of the partition coefficient comprises introducing an acid or base into the counter-current flow, e.g., at one stage or at a plurality of stages along said counter-current flow, in order to provide a variation of the pH along the counter-current flow. It is an advantage of these embodiments that this may be an easy way of providing a variation in the partition coefficient. The pH variation along the counter-current flow may be continuous or may be discontinuous to account for the different partition coefficients.

In embodiments, the process comprises separating at least two components. In embodiments, consecutive accumulation regions for different components are separated from each other by at least one stage, e.g., at least three stages, more preferably by at least five stages. It is an advantage of these embodiments that a good separation of the different components may be obtained.

In alternative embodiments, consecutive accumulation regions for different components may overlap for the at least two components. For example, such overlap may occur if the partition coefficients are too similar or if a mixture of two components is desired as product. If the accumulation regions overlap, in that region one or more products can be removed which contain a mixture of the components, the accumulation regions of which overlap. If more than one product is removed at different stages in the overlapping accumulation regions, the concentrations of the components may differ between the different products.

In embodiments, each stage comprises a mixer-settler. It is an advantage of these embodiments that a good exchange of the component between the first and second stage may be obtained.

In embodiments, the mixture comprises one or different metallic elements, wherein one or each of the component to be separated is a metallic element. The present invention is particularly well suited for separating different metallic elements from each other.

In embodiments, the counter-current flow comprises a variation along the counter-current flow of a variable equal to the partition coefficient of each component, being a ratio of a molar concentration of the component in the first phase to a molar concentration of the component in the second phase, multiplied by the first-to-second-phase volumetric flow rate ratio, wherein the accumulation region for each component comprises the location along the counter-current flow at which said variable crosses unity for said component. It is an advantage of these embodiments that a good accumulation of the component in the accumulation region may be achieved, leading to high concentrations of the components in their respective accumulation region.

In embodiments, removing each of the at least one component from the counter-current flow is performed using an extraction process from the first phase by a third phase.

In a second aspect, the present invention relates to a continuous-flow system for separating at least one component from a mixture thereof. The system comprises a counter-current flow setup comprising a fluidic channel for flowing a first phase in an opposite direction with respect to a second phase flowing in a fluidic channel, comprising a plurality of stages along the counter-current flow setup for exchanging the at least one component between the first and second phase. The continuous-flow system is adapted for providing each stage with a partition coefficient for each component between the first and second phase, and a first-to-second-phase flow rate ratio so that the partition coefficient and/or the flow rate ratio at different stages along the counter current flow setup are adapted for inducing, for the component at each of said stages, a net flux of the component along the counter-current flow, corresponding to a difference between a flux of the component in the first phase and a flux of the component in the second phase at said stage, such that the direction of said net flux is opposite for stages at opposite sides of an accumulation region for said component and, for each of said stages, pointing towards said accumulation region, so as to accumulate the component at the accumulation region. The system further comprises means for removing each of the at least one component from the counter-current flow by removing the component from the respective accumulation region.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable devices of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

FIG. 1A and FIG. 1B are schematic representations of a counter-current system for a counter-current process in accordance with embodiments of the present invention.

FIG. 2 is a schematic representation of a counter-current system for a counter-current process in accordance with embodiments of the present invention, comprising a removal element for removing a component from the counter-current flow.

FIG. 3 is a plot of a partition coefficient for three different components as dependent on pH, in a first example in accordance with embodiments of the present invention.

FIG. 4 is a plot of a degree of extraction for the three different components as dependent on pH, in a first example in accordance with embodiments of the present invention.

FIG. 5 is a plot of a concentration of each of the three components in the second, aqueous phase, as dependent on the stage index, in a first example in accordance with embodiments of the present invention.

FIG. 6 is a plot of a concentration of each of the three components in the first, organic phase, as dependent on the stage index, in a first example in accordance with embodiments of the present invention.

FIG. 7 is a plot of a selectivity of each of the three components in the first, organic phase, as dependent on the stage index, in a first example in accordance with embodiments of the present invention.

FIG. 8 is a plot of the pH of the second, aqueous phase as dependent on the index of the stage, in a second example in accordance with embodiments of the present invention.

FIG. 9 is a plot of the concentration of a metal in the organic phase, as dependent on the stage index, in a second example in accordance with embodiments of the present invention.

FIG. 10 is a plot of the pH of the second, aqueous phase as dependent on the index of the stage, in a third example in accordance with embodiments of the present invention.

FIG. 11 is a plot of the concentration of each metal in the organic phase, in arbitrary units, as dependent on stage index, in a third example in accordance with embodiments of the present invention.

FIG. 12 is a schematic representation of a counter-current system for a counter-current process in accordance with embodiments of the present invention, in a fourth example in accordance with embodiments of the present invention.

FIG. 13 is a plot of the optimized pH of the second, aqueous phase as dependent on the index of the stage, in a fourth example in accordance with embodiments of the present invention.

FIG. 14 is a plot of the concentration of metal in the first, organic phase, in arbitrary units, as dependent on stage index, in a fourth example in accordance with embodiments of the present invention.

FIG. 15 is a schematic representation of a counter-current system for a counter-current process in accordance with embodiments of the present invention, in a fourth example in accordance with embodiments of the present invention.

In the different figures, the same reference signs refer to the same or analogous elements.

**Description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. The term "comprising" therefore covers the situation where only the stated features are present and the situation where these features and one or more other features are present. The word "comprising" according to the invention therefore also includes as one embodiment that no further components are present. Thus, the scope of the expression "a device comprising means A and B" should not be interpreted as being limited to devices consisting only of components A and B. It means that with respect to the present invention, the only relevant components of the device are A and B.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In a first aspect, the present invention relates to a continuous-flow process for separating at least one component from a mixture of components. The process comprises a step a) of providing the mixture in a counter-current flow comprising a first phase flowing in an opposite direction with respect to a second phase, the first phase immiscible with and/or separate from the second phase. A plurality of stages are provided along the counter-current flow for exchanging the at least one component between the first and second phase. Each stage is associated with a partition coefficient for each of the at least one component between the first and second phase, and a first-to-second-phase flow rate ratio. The counter-current flow comprises, for each of the at least one component, an accumulation region, wherein the partition coefficient and/or the flow rate ratio of stages at opposite sides of the accumulation region are adapted for inducing, at each of said stages, a net flux of the component along the counter-current flow, such that the direction of said net flux is opposite for stages at opposite sides of the accumulation region and, for each of said stages, pointing towards the accumulation region, so as to accumulate the component at the accumulation region. Herein, the net flux corresponds to a difference between a flux of the component in the first phase and a flux of the component in the second phase at said stage. The process further comprises a step b) of removing each of the at least one component from the counter-current flow by removing the component from the respective accumulation region.

It is an advantage of embodiments of the present invention that a simultaneous separation of the at least one component, for example several components, from a mixture is enabled, by accumulating each component at the accumulation region for said component in the counter-current flow.

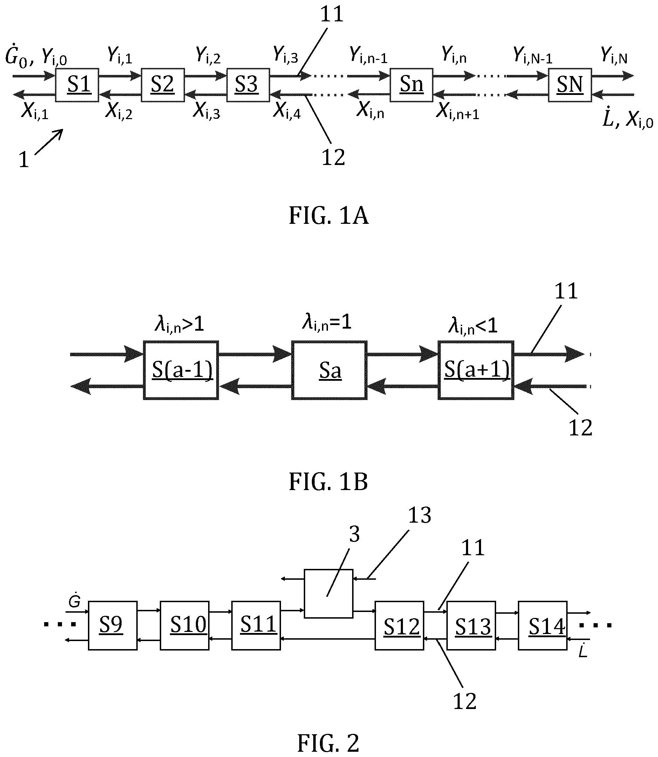

Reference is made to FIG. 1A, which is a schematical representation of a counter-flow system 1 in accordance with embodiments of the present invention, which may be used for performing a counter-flow process in accordance with embodiments of the present invention. A counter-current flow is provided comprising a first phase 11 flowing, at a volumetric flow rate $\dot{G}$, in counter-current with respect to a second phase 12, flowing at a volumetric flow rate $\dot{L}$. As such, the first phase 11 flows in an opposite direction as the second phase 12 along the counter-current flow (the arrows indicating the flow direction).

A plurality of stages Sn are provided along the counter-current flow. Consecutive stages Sn are fluidically coupled to each other, thereby enabling the flow of the first phase 11 and the second phase 12 between the consecutive stages Sn. As the first and second phases 11, 12 flow in opposite directions along the counter-current flow, they move in opposite directions between consecutive stages Sn as well. In the example illustrated, between a particular stage Sn (e.g., S1) and a subsequent stage S(n+1) (e.g., S2), the direction of flow of the first phase 11 is from the particular stage Sn to the subsequent stage S(n+1), and the direction of flow of the second phase 12 is from the subsequent stage S(n+1) to the particular stage Sn. This may, for example, be achieved by a first fluidic channel connecting the particular stage Sn and the subsequent stage S(n+1) for flowing the first phase 11, and a second fluidic channel, different from the first fluidic channel, connecting the particular stage Sn and subsequent stage S(n+1) for flowing the second phase 12.

In the example illustrated, the volumetric flow rates $\dot{G}$ and $\dot{L}$ are substantially constant along the counter-current flow. For example, the flow rates $\dot{G}$ and $\dot{L}$ between a first stage S1 and a second stage S2 are substantially the same as the flow rates $\dot{G}$ and $\dot{L}$ between the second stage S2 and a third stage S3.

The counter-current flow comprises a mixture of components, typically dissolved in the first phase 11 and the second phase 12. Herein, $Y_{i,n}$ and $X_{i,n}$ are a molar concentration of a component $i$ in the first phase and the second phase, respectively, leaving a particular stage Sn.

The flux of a component in a phase may refer to the amount, e.g., in mole, of the component in the phase that flows per period of time through a plane perpendicular to the flow direction of the phase, e.g. upstream or downstream. The flux of a component at a stage is typically the flux of the component leaving, e.g., at the outlet of, the stage. The flux of the component in the first phase may be assumed to be equal to a product of the volumetric flow rate $\dot{G}$ of the first phase 11 and the molar concentration $Y_{i,n}$ of the component in the first phase 11. The flux of the component in the second phase may be assumed to be equal to a product of the volumetric flow rate $\dot{L}$ of the second phase 12 and the molar concentration $X_{i,n}$ of the component in the second phase 12. Therein, it is assumed that further variables affecting the flux of the component in each phase 11, 12 are negligible, such as different drag forces due to a wall exerted on the components and the phase and affecting the movement of the component within the phase, which could in principle cause the flow rate of the component in each phase 11, 12 to slightly deviate from an ideal situation.

The net flux of the component at a stage Sn along the counter-current flow corresponds to the difference between the flux of the component in the first phase 11 and the flux of the component in the second phase 12 at said stage Sn. Within the above assumptions, in the example illustrated, the net flux, or a net flow rate, $\dot{n}_{i,n}$, of component $i$ at, e.g., flowing from, a particular stage Sn, can be defined as:

$$\dot{n}_{i,n} = \dot{G}Y_{i,n} - \dot{L}X_{i,n}.$$

(in units of mole per period of time). In the example illustrated, with reference to FIG. 1A, a positive $\dot{n}_{i,n}$ indicates a net flux in a direction from left to right, and a negative $\dot{n}_{i,n}$ indicates a net flux in a direction from right to left.

As the first phase 11 and the second phase 12 flow in opposite directions along the counter-current flow, the flux of the component in the first phase 11 and the flux of the component in the second phase 12 typically flow in opposite directions along the counter-current flow as well. Said net flux $\dot{n}_{i,n}$ is typically in a same direction as the flow direction of the first phase 11 when the flux of the component in the first phase 11 is larger than the flux of the component in the second phase 12. And vice versa, the net flux is typically in a same direction as the flow direction of the second phase 12 when the flux of the component in the second phase 12 is larger than the flux of the component in the first phase 11.

The first and second phases do not mix, because they remain separated due to the presence of a membrane or the like, or preferably, because the first phase 11 and the second phase 12 are immiscible. This allows for contacting the first phase with the second phase at each of the stages Sn, enabling exchange of the component between the first phase 11 and the second phase 12 at said stage, followed by phase separation of the first phase 11 and the second phase 12, and subsequent flow of the first phase 11 and the second phase 12 in opposite directions from the stage Sn. Alternatively or additionally, the first phase 11 and the second phase 12 may be separated from each other at each stage by a semi-permeable membrane, that is permeable to the components but impermeable to the first phase 11 and the second phase 12. The presence of such membrane allows transfer of components while keeping the phases unmixed.

Each stage Sn provides exchange of the components between the first phase 11 and the second phase 12, so that, at said stage, the components are divided between the first phase 11 and the second phase in accordance with a partition coefficient $K_{i,n}$, being a ratio of the concentration $Y_{i,n}$ of the component i in the first phase, at said stage, to the concentration $X_{i,n}$ of the component i in the second phase, at said stage, preferably at chemical equilibrium:

$$K_{i,n} = Y_{i,n}/X_{i,n},$$

which may be dependent on the component i and the stage Sn. Herein, a chemical form of the component in the first phase may be the same as, or different from, a chemical form of the component in the second phase. For example, the component may form a complex with a ligand or chelating agent in the first phase but not in the second phase, or vice versa.

The partition coefficient may be the ratio reached at thermodynamic and/or chemical equilibrium, the present invention not being limited thereto. When equilibrium is reached, the partition coefficient may represent a comparison between a solubility of the component in the first phase and a solubility of the component in the second phase. However, said equilibrium may not necessarily be reached in practice. For example, the volumetric flow rates of the phases 11, 12 may be too large to reach thermodynamic and/or chemical equilibrium at each of the stages.

A variable $\lambda_{i,n}$ may be defined that is equal to the partition coefficient $K_{i,n}$ of each component i at a stage Sn, multiplied by a first-to-second-phase flow rate ratio $\dot{G}/\dot{L}$ that is a ratio of the volumetric flow rate $\dot{G}$ of the first phase 11 to the volumetric flow rate $\dot{L}$ of the second phase 12. The net flux of a component at a particular stage, e.g., leaving said particular stage, is zero, if said variable $\lambda_{i,n}$ equals unity, i.e., integer 1:

$$\lambda_{i,n} = K_{i,n} \cdot \dot{G}/\dot{L} = 1.$$

If said variable $\lambda_{i,n} > 1$, e.g., larger than unity (wherein said variable $\lambda_{i,n}$ may have any integer or non-integer value larger than unity), the net flux $\dot{n}_{i,n}$ of the component i is in the direction of $\dot{G}$, the flow direction of the first phase 11, that is, to the right in the example illustrated in FIG. 1A. If, on the other hand, the variable $\lambda_{i,n} < 1$, e.g., smaller than unity (wherein said variable $\lambda_{i,n}$ may have any integer or non-integer value smaller than unity), the net flux $\dot{n}_{i,n}$ of the component i is in the direction of $\dot{L}$, the flow direction of the second phase 12, that is, to the left in the example illustrated in FIG. 1A. As such, the variable $\lambda_{i,n}$, and the net flux $\dot{n}_{i,n}$, and thus the direction of the net flux of the component, at a stage Sn, are dependent on the partition coefficient $K_{i,n}$ and the first-to-second-phase flow rate ratio at said stage Sn.

Reference is made to FIG. 1B, which shows a part of the counter-current system 1 of FIG. 1B that contains a stage Sa at which a component accumulates. A variation, or gradient, of the variable $\lambda_{i,n}$ may be formed along the counter-current flow. In the example illustrated, the variable $\lambda_{i,n}$ may decrease in the direction of the flow direction of the first phase 11, and cross unity at a particular stage Sa. In this example, the variable $\lambda_{i,n}$ for stages S(a-1) located at a side of the particular stage Sa at which the variable $\lambda_{i,n}$ crosses unity, downstream of the flow of the second phase 12, referring to FIG. 1B, to the left of the particular stage Sa, is larger than 1, so that a net flux $\dot{n}_{i,n}$ of the component i at those stages S(a-1) may be to the right, towards the particular stage Sa at which the variable $\lambda_{i,n}$ crosses unity. Furthermore, the variable $\lambda_{i,n}$ for stages S(a+1) located at a side of the particular stage at which the variable $\lambda_{i,n}$ crosses unity, downstream of the flow of the first phase 11, referring to FIG. 1B, to the right of the particular stage Sa, is negative, so that a net flux $\dot{n}_{i,n}$ of the component i at those stages S(a+1) may be to the left, towards the particular stage Sa at which the variable $\lambda_{i,n}$ crosses unity. As such, the direction of said net flux $\dot{n}_{i,n}$ is opposite for stages S(a+1) and S(a-1) at opposite sides of the stage Sa at which the variable $\lambda_{i,n}$ crosses unity, and pointing towards said stage Sa, resulting in accumulation of the component at the stage Sa at which the variable $\lambda_{i,n}$ crosses unity, effectively forming an accumulation region containing said stage Sa.

Furthermore, as the partition coefficient is dependent on the component, the value of the variable $\lambda_{i,n}$ and the direction of the net flux at a stage may be dependent on the component as well. This enables the accumulation of different components at different locations along the counter-current flow thereby enabling separating the different components

EP 4 491 254 A1

within a mixture from each other. In other words, for the different components, the counter-current flow contains different accumulation regions at different locations along the counter-current flow.

In addition, even a dilute component, i.e., a component of which only a small concentration is present in a mixture in the counter-current flow, may be enriched at its accumulation region along the counter-current flow, to a degree that it may be removed at a high concentration from the counter-current flow. This may facilitate the removal of said component from the counter-current flow.

An advantage of embodiments of the present invention is that several components can be separated in a single process, and that the process can in principle be carried out in a single extraction equipment. Preferably, a sufficient difference in the variable $\lambda_{i,n}$, or the corresponding partition coefficient $K_{i,n}$, is present between all components to be separated from the mixture. This may be achieved by, e.g., optimizing the selection of the first and/or second phase, its pH, or the choice of partition agent.

In preferred embodiments, the process comprises generating a variation of the partition coefficient for each component to be separated along the counter-current flow. Preferably, said variation of the partition coefficient is adapted such that the direction of the net flux is opposite for stages at opposite sides of the accumulation region and, for each of said stages, pointing towards the accumulation region. In other words, in these embodiments, the partition coefficient for each component may be different for different stages, adapted such that the direction of the net flux is opposite for stages at opposite sides of the accumulation region and, for each of said stages, pointing towards the accumulation region.

In these embodiments, the first-to-second-phase flow rate ratio is, preferably, substantially constant for each of the stages. In these embodiments, minor differences in the flow rate ratio may occur, for example, due to the addition of small amounts of acid or base, of a partitioning agent, or due to the process of removing of each of the at least one component from the counter-current flow, which may, e.g., result in loss of part of one of the phases.

However, although in the explanation above, for simplicity, it was assumed that the first-to-second-phase flow rate ratio is substantially constant along the counter-current flow, this is not essential. Instead, as the variable $\lambda_{i,n}$ is also dependent on the first-to-second-phase flow rate ratio, at least in principle, the variation of the variable $\lambda_{i,n}$ may be formed by providing a variation of the first-to-second-phase flow rate ratio along the counter-current flow. In still different embodiments, both the variation in the partition coefficient, and the variation of the first-to-second-phase flow rate ratio, may be formed along the counter-current flow. It is an advantage of these embodiments that the variation of the first-to-second-phase flow rate ratio may improve the separation. Said variation of the first-to-second-phase flow rate ratio may be formed by adding a volume of a phase at each of at least one location along the counter-current flow so as to increase the volumetric flow rate at said location, and/or removing part of a phase at each of at least one location along the counter-current flow so as to reduce the volumetric flow rate at said location.

The partition coefficient for each component may be dependent on a range of factors. For example, the partition coefficient between the first and second phase at a stage may be dependent on a temperature of the first and second phase at said stage, or on a concentration of a partitioning agent in the first and/or second phase at said stage, or an acidity or pH, of the first and/or second phase at said stage.

In embodiments, providing the variation of the partition coefficient comprises introducing an acid or base into the counter-current flow in order to provide a variation of the pH, typically of the pH of the aqueous phase, along the counter-current flow. For example, by adding small amounts, e.g., flow rates, of acid or base at the different stages along the counter-current flow, a variation of the partition coefficient may be obtained. In embodiments, the acid and/or base is added to the counter-current flow, e.g., to the aqueous phase, at a single or at each of a plurality of locations, e.g., stages, along the counter-current flow, at a flow rate that may be the same or different for the different stages.

In embodiments, generating said variation comprises generating a variation of a partitioning agent along the counter-current flow. The partition coefficient may be dependent on the concentration of the partitioning agent. The partitioning agent may be a chelating agent or a ligand to which a component may bind, affecting the solubility of the component in at the first phase and/or the second phase. Said partitioning agent may be an anti-solvent in physical extraction, that is miscible with the first phase and/or the second phase and that changes the solubility of a component in the respective phase.

Said partitioning agent may be an entrainer in distillation. In distillation, the first phase may be a liquid, flowing from a top to a bottom of a distillation column and the second phase may be a vapor, flowing from the bottom to the top of the distillation column. If three components, comprising a component boiling at a low temperature, and a component boiling at an intermediate temperature, and a component boiling at a high temperature, are added to a distillation column, the light component moves to the top, the heavy component to the bottom. It is then in principle possible to add an entrainer at a point, e.g., at a stage, along the counter-current flow, flowing together with the liquid downwards, such that the component, boiling at an intermediate temperature is, below that point, preferentially transferred to the liquid phase moving downward (like absorption). Since, the lower in the column, the higher the temperature, it can - in principle - be such that that component then preferably shifts, e.g., evaporates, into the vapor phase, possibly simply because its vapor pressure increases or because the interaction between that component and the entrainer is reduced (e.g., due to the increasing temperature). Said component boiling at intermediate temperatures may then be accumulated at a point intermediate along the counter-current flow.

In embodiments, the partitioning agent is added to the counter-current flow, e.g., to the aqueous phase, at a single or at each of a plurality of locations, e.g., stages, along the counter-current flow, at a flow rate that may be the same or different for the different stages.

In some embodiments, providing the variation of the partition coefficient comprises providing a variation of a temperature along the counter-current flow. In embodiments, a plurality of heating and/or cooling elements are provided along the counter-current flow.

Although the first and second phase are typically a solvent, this is not essential. For example, one of the stages may be a solid, e.g., solid particles, and the variation in partition coefficient may correspond, for example, to a variation in adsorption isotherm, or absorption partition coefficient (e.g., Nernst distribution). In these embodiments, the volume of the solid corresponds to the solid volume (e.g., excluding spaces between solid particles). In these embodiments, a concentration of a component in the solid particles corresponds to the amount of the component in moles in or at the solid, e.g., adsorbed or absorbed to the solid, divided by said volume. An example of a process that may be used is simulated-moving bed chromatography. In embodiments, the variation in partition coefficient may be formed by a variation of a concentration of any equilibrium-influencing component in any separation process.

In embodiments, the process comprises providing the counter-current flow. Providing the counter-current flow may comprise introducing the first phase through an inlet for the first phase at a first end of the counter-current flow, wherein the first flow is induced to flow along the counter-current flow to an outlet for the first phase at a second end of the counter-current flow. Providing the counter-current flow may comprise introducing the second phase through an inlet for the second phase at the second end of the counter-current flow, wherein the second flow is induced to flow along the counter-current flow to an outlet for the second phase at the first end of the counter-current flow.

In preferred embodiments, the phases are immiscible. In embodiments, providing the counter-current flow comprises providing the first phase being an organic phase, e.g., organic solvent, and the second phase being an aqueous phase, e.g., aqueous solvent. It is an advantage of these embodiments that, at the stages, the first phase and the second phase may contact each other for exchanging the components, while the first phase and the second phase may leave the stage as separate phases.

In embodiments, providing the mixture in the counter-current flow comprises providing the mixture in the second phase, e.g., the aqueous phase. For example, the second phase may be introduced into the counter-current flow together with the mixture, e.g., through the inlet for the second phase.

In embodiments, removing each of the at least one component from the counter-current flow comprises removing each of the at least one component from the organic phase. In these embodiments, each component may be extracted from the organic phase using a third phase, e.g., an aqueous phase, different from the second phase. In these embodiments, the third phase is typically not part of the counter-current flow. The third phase may be the same or different for the separation of the different components. It is an advantage of these embodiments that a high purity of the separated components may be obtained when extracting each component from the organic phase.

In different embodiments, at each stage, the first phase and the second phase are miscible but are, at the stages, separated from each other by a membrane that is at least permeable to the components to be separated, e.g., to each of the components in the mixture. For example, the membrane may be impermeable to the solvent of the first phase and to the solvent of the second phase.

In embodiments, part of the first phase is diverted, at the accumulation region for a component along the counter-current flow, from the counter-current flow, into a side-stream, wherein the component may be removed from the side-stream. Subsequently, the side-streamed first phase may be re-introduced into the counter-current flow, e.g., at the same location from where it was diverted. In different embodiments, the first phase may enter a removal element or an extraction element at the accumulation region for a component for extracting the component using the third phase, after which the first phase may continue along the counter-current flow.

In embodiments, the accumulation region for a component is a region along the counter-current flow where the component accumulates. In embodiments, the accumulation region for a component contains the location where the concentration of the component, e.g., in the first or second phase, is largest amongst locations within the counter-current flow. In embodiments, the accumulation region at least comprises a peak concentration, e.g., a maximum of a concentration, of the component. In embodiments, throughout the accumulation region for a component, the concentration of the component is at least 20%, preferably at least 30%, more preferably at least 50%, of the peak concentration of the component within the accumulation region, e.g., in the first or second phase. In embodiments, the accumulation region comprises at least one stage, e.g., multiple stages, at which the net flux of the component along the counter-current flow is substantially zero. In embodiments, the accumulation region is contained between two consecutive stages, wherein the net flux of the component at each of said two consecutive stages is directed towards another, e.g., the other, of the consecutive stages.

In embodiments, the accumulation region is a region along the counter-current flow containing stages at opposite sides for which the direction of the net flux of the component is opposite. In embodiments, the accumulation region is a region along the counter-current flow for which the net flux of the component at stages at opposite sides point towards the accumulation region. Said stages at opposite sides of the accumulation region comprise at least the stages adjoining the accumulation region, preferably each of the plurality of stages along the counter-current flow.

In preferred embodiments, throughout the accumulation region, the concentration (in mole by volume) of the component in each phase of the first and second phase is higher, e.g., at least 5%, preferably at least 10%, more preferably at least 50%, even more preferably at least 100%, than a concentration of said component in said phase at each of the opposite sides of the accumulation region along the counter-current flow, preferably at any other location within the counter-current flow. Preferably, throughout the accumulation region, the concentration (in mole by volume) of the component in each phase of the first and second phase is higher, e.g., at least 5%, preferably at least 10%, more preferably at least 50%, even more preferably at least 100%, than the concentration of said component in said phase at the location along the counter-current flow where the component is introduced into the counter-current flow, or than a mean concentration of said component in said phase between the location along the counter-current flow where the component is introduced into the counter-current flow and the accumulation region. In preferred embodiments, the accumulation region is the part of (along) the counter-current flow where the concentration (in mole by volume) of the component in each phase of the first and second phase is higher, e.g., at least 5%, preferably at least 10%, more preferably at least 50%, even more preferably at least 100%, than a concentration of said component in said phase at each of the opposite sides of the accumulation region along the counter-current flow, preferably at any other location within the counter-current flow. Preferably, the accumulation region is the part of (along) the counter-current flow where the concentration (in mole by volume) of the component in each phase of the first and second phase is higher, e.g., at least 5%, preferably at least 10%, more preferably at least 50%, even more preferably at least 100%, than the concentration of said component in said phase at the location along the counter-current flow where the component is introduced into the counter-current flow, or than a mean concentration of said component in said phase between the location along the counter-current flow where the component is introduced into the counter-current flow and the accumulation region.

In embodiments, the accumulation region comprises at least one stage, e.g., multiple stages. In these embodiments, the component may be removed from the counter-current flow by removing the component from said stage, e.g., by removing part of the first or second phase from said stage, extract the component from the removed part of the first or second phase, then re-introducing the removed part of the first or second phase at said stage. In embodiments, for each of at least one of the components to be separated, the counter-current flow comprises two consecutive stages, comprising a first stage and a second stage, wherein the net flow of the component at the first stage is directed towards the second stage, and the net flow of the component at the second stage is directed towards the first stage. Said two consecutive stages may be contained in the accumulation region, or the accumulation region may be located between said two consecutive stages. In embodiments, the component may be removed from the counter-current flow by removing the component from the first or second phase between the first and second stage, e.g., by performing extraction on the first or second phase, using a third phase, between the first and second stage. In embodiments, part of the first or second phase may be diverted from the counter-current flow between the first and second stage to form a side-stream, and the component may be removed from said side-stream, and the side-stream may subsequently be re-introduced into the counter-current flow. In different embodiments, the accumulation region contains said consecutive stages. For example, part of the first or second phase may be removed from the first stage, the component may be removed from said removed first or second phase, and the component may flow into the second stage.

Each component may be separated from one of the first and second phase by diverting part of said phase into a side-stream, e.g., from a stage or from a fluidic channel between two consecutive stages, wherein the component is removed from said side-stream, and the side-stream, after said removal, may be re-introduced into the counter-current flow, e.g., at a stage or into a fluidic channel connecting two consecutive stages. The concentration in said side-stream may be close to the concentration of the component in the feed, e.g., at the location where the component is introduced (such as at the inlet for the first phase into the counter-current flow), times the volumetric flow rate of the phase into which the component is introduced, divided by the volumetric flow rate of the side-stream. Hence, the concentration of the component in the side-stream can be arbitrarily high by reducing the volumetric flow rate of the side stream.

The continuous-flow process is for separating at least one component from a mixture of components, and may be used for separating more than one component. The number of stages separating consecutive accumulation regions along the counter-current flow may be selected based on the difference in variable $\lambda_{i,n}$ for different components, and on the variation in $\lambda_{i,n}$, e.g., the variation of the partition coefficient and/or the variation in the first-to-second flow rate ratio, along the counter-current flow. Said number may further depend on the desired purity. Typically, a higher purity of each component may be achieved with more stages separating consecutive accumulation regions for different components. In embodiments, consecutive accumulation regions for different components are separated from each other by at least three stages, more preferably by at least five stages. It is an advantage of these embodiments that a high purity of the separated components may be obtained.

In preferred embodiments, each stage comprises means enabling exchanging the component between the first phase and the second phase configured so that, within the stage, a thermodynamic and/or chemical equilibrium with respect to the partition coefficient may be reached, so the ratio of the concentration of the component in the first phase leaving the stage to the concentration of the component in the second phase leaving the stage is equal to the equilibrium partition coefficient, i.e., the partition coefficient at equilibrium. Preferably, at each stage, said thermodynamic and/or chemical equilibrium is reached.

In preferred embodiments, each stage comprises a mixer-settler. In embodiments, one or a plurality of stages are comprised in an extraction column. In embodiments, one or a plurality of stages are comprised in a centrifugal extractor. In some embodiments, each stage comprises a device selected from a mixer-settler, an extraction column, or a centrifugal extractor. Although each stage may comprise a separate device, each stage may, instead, be a subdivision, which may be linked to structural features, the present invention not being limited thereto (e.g., may be a "mental" or "virtual" subdivision, or a subdivision based on structural features). For example, a packed extraction column or a centrifugal extractor may comprise a plurality of stages, each stage being a part of the packed extraction column or centrifugal extractor, respectively.

In embodiments, each stage comprises an inlet for the first phase, an outlet for the first phase, an inlet for the second phase, and an outlet for the second phase. Within the stage, the first phase and the second phase may be mixed so as to facilitate rapid exchange of the component between the first phase and the second phase. Subsequently, the first phase and the second phase, being immiscible, may be separated again, and the first phase may leave the stage through the outlet for the first phase and the second phase may leave the stage through the outlet for the second phase. In embodiments, for each pair of consecutive stages along the counter-current flow, the first phase flows from the outlet for the first phase of a first stage of the pair to the inlet for the first phase of a second stage of the pair, and the second phase flows from the outlet for the second phase of the second stage of the pair to the inlet for the second phase of the first stage of the pair. In embodiments, for each pair of consecutive stages along the counter-current flow, the outlet for the first phase of the first stage of the pair is fluidically connected to the inlet for the first phase of a second stage of the pair, and the outlet for the second phase of the second stage of the pair is fluidically connected to the inlet for the second phase of the first stage of the pair. As such, the different stages may be connected to each other so as to obtain the counter-current flow, whereas, within each stage, it is possible that there is no counter-current flow.

In some embodiments, an extraction column, e.g., packed extraction column, may comprise multiple stages, e.g., the plurality of stages, each stage comprising a portion of the extraction column. The extraction column may comprise an inlet for the phase having the highest density amongst the first and second phase at an upper part of the extraction column, and an inlet for the phase having the lowest density amongst the first and second phase at a lower part of the extraction column. The extraction column may comprise an outlet for the phase amongst the first and second phase having the highest density at a lower part of the extraction column, below the inlet for the phase having the lowest density, and an outlet for the phase amongst the first and second phase having the smallest density at an upper part of the extraction column, above the inlet for the phase having the highest density. The phase having the largest density flows from the upper part towards the lower part and the phase having the lower density flows from the lower part towards the upper part, so that the first phase and the second phase flow in counter-current flow with respect to each other within the extraction column. Each portion of the extraction column may be a structurally distinct section of the extraction column along said counter-current flow, but this is not strictly required.

In still different embodiments, the counter-current flow, including the first phase and the second phase, flow in a conduit, wherein the first phase and the second phase are, at each stage or along the complete counter-current flow, separated from each other by an interface for exchanging the component between the first and second phase. The interface may be the area at which the first and second phase, being immiscible, contact each other, or the interface may comprise a semi-permeable membrane, which may be impermeable to the solvent of the first and second phase but permeable to the components. In these embodiments, the first phase may flow in a first direction along the interface, and the second phase may flow in a second direction, opposite to the first direction, along the interface. In these embodiments, each stage may contain a portion of the conduit.

The mixture may comprise non-ionic species or ions, e.g., anions or cations. Preferably, each of the at least one component to be separated is an ion. Examples of anions may be anions from acids, such as carboxylic acids or amino acids. In embodiments, the mixture comprises different metallic elements, wherein one of or each of the at least one component to be separated is a metallic element. The present invention is particularly well suited for separating metals from a metal stream, e.g., a leach liquor, but may, in principle, be used for any process for separating a component from a mixture of components, wherein the component to be separated has a different partition coefficient than other components of the mixture.

In embodiments, removing each of the at least one component from the counter-current flow is performed using an extraction process from the first phase, e.g., the organic phase, by a third phase, e.g., an aqueous phase. In these embodiments, the third phase is different from the first and second phase, and it is typically not part of the counter-current stream comprising the first and second phase.

Any features of any embodiment of the first aspect may be independently as correspondingly described for any embodiment of the second aspect of the present invention.

In a second aspect, the present invention relates to a continuous-flow system for separating at least one component from a mixture thereof. The system comprises a counter-current flow setup comprising a fluidic channel for flowing a first phase in an opposite direction with respect to a second phase flowing in a fluidic channel, comprising a plurality of stages along the counter-current flow setup for exchanging the at least one component between the first and second phase. The continuous-flow system is adapted for providing each stage with a partition coefficient for each component between the first and second phase, and a first-to-second-phase flow rate ratio so that the partition coefficient and/or the flow rate ratio at different stages along the counter current flow setup are adapted for inducing, for the component at each of said stages, a net flux of the component along the counter-current flow, corresponding to a difference between a flux of the component in the first phase and a flux of the component in the second phase at said stage, such that the direction of said net flux is opposite for stages at opposite sides of an accumulation region for said component and, for each of said stages, pointing towards said accumulation region, so as to accumulate the component at the accumulation region. The system further comprises means for removing each of the at least one component from the counter-current flow by removing the component from the respective accumulation region.

The system may comprise valves, pumps, and controllers. Optionally, a processing unit may be connected to these devices and may be programmed to control parts of the system following an algorithm for implementing the method of the previous aspect. For example, the flow of phases can be dynamically changed, and/or the material for changing the partition coefficient may be added, at dynamic rates adapted to provide the desired flux to the accumulation region. The present invention is not limited to dynamic control. Any features of any embodiment of the second aspect may be independently as correspondingly described for any embodiment of the first aspect of the present invention.

Example 1: Counter-current flow wherein the behaviour of different components is independent of each other

In this example in accordance with embodiments of the present invention, a simulation is performed of a counter-current process wherein a counter-current flow is provided comprising a first phase 11 flowing in an opposite direction, in counter-current, with respect to a second phase 12, wherein 31 stages Sn are provided along the counter-current flow. Part of the counter-current flow, showing six of these stages S9-S14, is shown in FIG. 2. A mixture comprising three components is introduced into the counter-current flow, in this example, into the second phase 12 (the arrows indicating the flow direction).

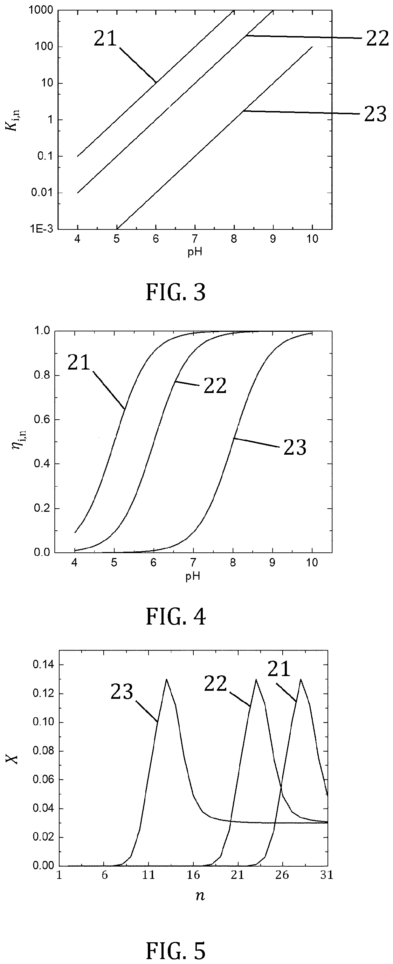

Reference is made to FIG. 3, which is the partition coefficient $K_{i,n}$, at chemical equilibrium, for the three different components 21, 22, 23, as dependent on pH; and to FIG. 4, showing a degree of extraction $\eta_{i,n}$, or extraction efficiency, for said three different components 21, 22, 23, for a component i, which is the amount of the component in the extractant phase, which is in this example the first phase 11, over the sum of the amount of the component in the first phase 11 and the second phase 12 combined, as a function of pH. As is further clear from FIG. 3 and FIG. 4, the partition coefficient as function of pH, typically characterized by the reaction equilibrium constant or the corresponding so-called pK-value, is different for different components 21, 22, 23.

As a result of the different partition coefficients for the different components 21, 22, 23, and assuming a substantially constant first-to-second-phase flow rate ratio along the counter-current flow, the partition coefficient association with the different stages, or for the different stages may be adapted so that the accumulation region for the different components is located at different locations along the counter-current flow. Within the assumptions made above that the flow rate in a phase is only dependent on the concentration of the component in the first and second phase, at chemical equilibrium with the second and first phase, respectively, and on the volumetric flow rate of the phase, said accumulation region may contain the location at which $\lambda_{i,n}$ equals unity, and the location at which $\lambda_{i,n}$ equals unity may be different for the different components.

In particular, if a low pH is realized at the right end of process shown in FIG. 2, the partition coefficient will be low at the right end of the counter-current flow, $\lambda_{i,n}$ for a component is less than unity and the component moves to the left. If the pH is high at the left end of the counter-current flow, the partition coefficient is high, $\lambda_{i,n}$ larger than unity and the component moves to the right. At a location between the left end and the right end, $\lambda_{i,n}$ will be exactly unity, at which point in the process the component will accumulate, since it is driven through the counter-current flow from both sides towards that point.

The first phase 11 is, in this example, an organic solvent, and the second phase 12, is, in this example, an aqueous solvent, immiscible with the first phase 11. In the example illustrated, a constant variation in pH of the aqueous phase is generated along the counter-current flow, so that the pH linearly decreases from a pH of 10 at the first stage S1, located proximate to the inlet of the first phase 11, corresponding to the outlet of the second phase 12, to a pH of 4 at the thirty-first stage S31, located proximate to the inlet of the second phase 12, corresponding to the inlet of the first phase 11, so that the pH difference between consecutive stages is 0.2. In this exemplary simulation, it has been assumed that the components 21, 22, 23 behave independently from each other.

FIG. 5 is a plot of a concentration X of each component 21, 22, 23 in the second phase 12 as dependent on the stage index n for the different stages Sn, running from 1 to 31, wherein the stage with index 1 is located at the inlet of the first phase 11 and the stage with index 31 is located at the inlet of the second phase 12. As the three components 21, 22, 23 are introduced via the inlet of the second, aqueous phase 12, at the stage with index 31, a concentration X of each component in the second phase 12 is nonzero at the stage with index 31. Due to the low pH at the inlet of the second phase 12, the components 21, 22, 23 partition preferably into the second phase 12 (cfr. FIG. 3 and FIG. 4), resulting in a net flux of each of the components 21, 22, 23, at the stage with index 31, i.e., S31, in the direction of flow of the second phase 12, towards the left in FIG. 3, and towards stages with a lower index.

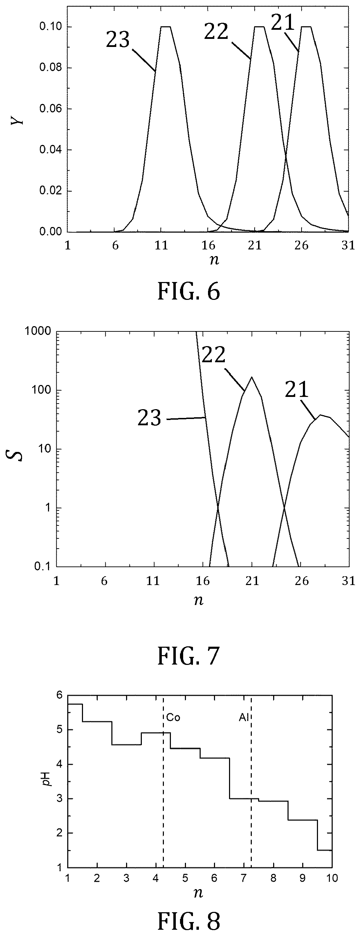

FIG. 6 is a concentration Y of each component 21, 22, 23 in the first phase 11, as dependent on the stage index n. Due to the low pH at the inlet of the second phase 12, the solubility of the components 21, 22, 23 is best in the second phase 12, which is where the components 21, 22, 23 are introduced into the counter-current flow. Thus, the concentration Y of each component 21, 22, 23 in the first phase 11 for stages near the inlet of the second phase 12 is typically low.

It may be observed that, in this example, the first component 21 appears to accumulate in the first phase 11 near the stage with index 26, at which the pH of the second, aqueous phase 12 is 5.0. As such, the stage with index 26 is in this example, the location at which, for the first component 21, $\lambda_{i,n} = \lambda_{21,26} = 1$. In this example, the second component 22 appears to accumulate in the first phase 11 near the stage with index 21, at which the pH is 6.0, which is, in this example, the location at which, for the second component 22, $\lambda_{i,n} = \lambda_{22,21} = 1$. In this example, the third component 23 concentrates in the first phase 11 near the stage with index 11, at which the pH is 8.0, which is, in this example, the location at which, for the third component 23, $\lambda_{i,n} = \lambda_{23,11} = 1$.

It may be observed that, for each component 21, 22, 23, the concentration X in the second phase 12 strongly declines for stages having an index lower than the stage at which the component 21, 22, 23 is accumulated. Due to the high pH at the outlet of the second phase 12, the components 21, 22, 23 partition preferentially into the first, organic phase 11, resulting in a net flux of the components 21, 22, 23 in the direction of flow of the first phase 11, in the direction of stages with a higher index. When, flowing from the inlet for the second phase 12 in the direction of flow of the second phase 12, each component 21, 22, 23 has reached its respective accumulation region, flowing further in the direction of flow of the second phase 12 is countered by a larger flow rate of the component in the opposite direction, in the flow direction of the first phase 11, resulting in a net flow of the component 21, 22, 23 in the flow direction of the first phase 11. Effectively, for each component, at stages at opposite sides of the accumulation region for the component, a net flux is obtained towards the accumulation region for said component, and the net flux is opposite, e.g., inverted, for stages at opposite sides of the accumulation region.

Reference is made to FIG. 7, which is a plot of the selectivity S, which is the concentration of a component 21, 22, 23 in the first, organic phase, over the sum of the concentrations of the three components 21, 22, 23, in the first phase 11, as dependent on the stage index n. It may be observed that an optimum selectivity may be obtained for each of the three components 21, 22, 23 when each component 21, 22, 23 is removed from the counter-current flow from the first phase 11, when: the first component 21 is removed from the stage with index 27; the second component 22 is removed from the stage with index 20; and the third component 23 from the stage with index 15 or lower, preferably from the stage 11 or 10 where the concentration of the third component 23 in the first phase 11 is largest (cfr. FIG. 6). It may be observed that the optimum selectivity is not necessarily achieved at the location where the highest concentration, e.g. the strongest accumulation, of the component is obtained. Indeed, it may be preferred to remove the component from the counter-current flow at a location within the accumulation region that is slightly shifted from the location at which the net flux is closest to zero, e.g., from the location at which $\lambda_{i,n}$ is unity.

Reference is made again to FIG. 2, showing the location of removal of the third component 23 from its accumulation region, by an extraction process in a removal element or an extraction element 3 that receives the first, organic phase 11 between the stage S11 and the stage S12, corresponding to extraction from stage S11, i.e., from the outlet of stage S11, and extracts the component from said first, organic phase 11. For this extraction, a third phase 13, typically immiscible with the first phase 11, e.g., an aqueous phase 13, may be used. After said extraction, the first, organic phase 11 may be provided back into the counter-current flow.

In this example, if the components 21, 22, 23 would be removed from the second phase 12, the selectivity would be much less, since the components 21, 22, 23 not yet removed until they reach the accumulation region of one component will pass that stage via the second phase 12.

If only a difference in pK of 1 exists between two components, five stages separating the accumulation regions from each other is sufficient to achieve essentially complete separation, e.g., in this example, to achieve selectivities of at least 40.

In this example, the mixture was introduced into the counter-current flow together with the second, aqueous phase, e.g. through the inlet for the second phase. In alternative embodiments, the mixture may be introduced in the first, organic phase, e.g. through the inlet of the first phase into the counter-current flow. In alternative embodiments, the components to be separated may be introduced dissolved in an organic and/or aqueous phase at intermediate stages into the counter-current flow.

In embodiments, one of the components to be separated may directly move into the aqueous stream (such as at a high pH in the above example). Said component would then leave the counter-current flow together with the aqueous phase through the outlet for the aqueous phase. That would result in a high purity for said single component if each of the other components of the mixture that enter the counter-current flow through the inlet for the first, organic phase accumulate at their respective accumulation region along the counter-current flow, and are removed at the accumulation region so that they to do not reach the aqueous outlet.

In the above example, the mixture comprises three components entering in the aqueous phase, and each of the three components is accumulated at their respective accumulation region along the counter-current flow. Alternatively, two of the components could be accumulated at their respective accumulation regions in the counter-current flow, while the third component may be removed from the outlet of the organic phase. This may result in a high purity of the third component as well. Still alternatively, although in the above example, each of the three components were removed from the organic phase, the third component could be accumulated in its accumulation region, and it could be removed from the aqueous phase via extraction, e.g., with a third phase that is an organic phase. In that case, the purity of the third component would be high as well, as the first and second component are not present in the aqueous at the accumulation region for the third component (as they were removed upstream along the flow of the aqueous phase at their respective accumulation regions).

Furthermore, although above, the mixture is introduced together with the second, aqueous phase into the counter-current flow, alternatively, the mixture may be introduced together with the first, organic phase, e.g. through the inlet of the first phase, into the counter-current flow. Still alternatively, a first part of the mixture may be introduced together with the first, organic phase, e.g., through the inlet of the first phase, into the counter-current flow and a second part of the mixture may be introduced together with the second, aqueous phase into the counter-current flow. This may be particularly interesting if the components of the first part of the mixture differ from the components of the second part of the mixture, and the components of the first part of the mixture substantially do not cross the components of the second part of the mixture along the counter-current flow.

In principle, it is possible to remove the component via a side-stream of the aqueous phase. In a technical process purity may nevertheless be sufficient and possibly better than in conventional processes, if the removal volumetric flow rate of aqueous phase is small leading to a high concentration of component in the accumulation region and at the same time the feed concentrations of other components in the aqueous phase are small, which is more or less the concentration of those components in the aqueous stream passing by in the accumulation region.

In preferred embodiments, the first, organic phase is recycled, e.g. flows, via a flow external to the counter-current flow, from the outlet of the first phase of the counter-current flow, to the inlet of the first phase of the counter-current flow.

Example 2: Counter-current flow wherein the behaviour of different components is dependent on each other

In a further example in accordance with embodiments of the present invention, some assumptions were dropped. The simulation now incorporated competition of several components for a single partition agent, e.g., ligand or chelating agent. Furthermore, the amounts of acid and base that define a pH variation are determined. In addition, the simulations were used to optimize the pH variation to minimize the cost of the counter-current process.

In a next step, the number of stages was varied, so as to minimize the number of stages while maintaining a high product purity. The simulations were based on T. Suzuki, T. Nakamura, Y. Inoue, M. Niinae, J. Shibata (2012). A hydrometallurgical process for the separation of aluminum, cobalt, copper and lithium in acidic sulfate media. Separation and Purification Technology 98, 396-401 (henceforth called Suzuki et al).

Since the main objective was to show the principal feasibility of the counter-current process in accordance with embodiments of the present invention, in this simulation, as components, the metals Al, Co, and Li were considered with, as organic reactive extractant in the first, organic phase, (2-ethylhexyl)phosphonic acid mono-2-ethylhexyl ester (PC-88A, 10 vol.% in kerosene) and trioctylamine (TOA, 5 vol.% in kerosene). The equilibrium constants, e.g. partition coefficients, for reactive extraction were evaluated using the diagram representing the equilibria in Fig. 5 of Suzuki et al. From Suzuki et al, the following reaction equation was used for the simulation:

$$M_i^{m_i+} + n_i (HR)_2 \leftrightarrow MR_{m_i} HR_{(2n_i - m_i)} + m_i H^+,$$

wherein $M_i$ is a metal corresponding to component i (in this example, Al, Co, or Li), HR having a positive charge $m_i$, with charged species $M_i^{m_i+}$ and $m_i H^+$ in the aqueous phase, and HR representing molecules of PC-88A, and $(HR)_2$ representing molecules of PC-88A in dimeric form in the organic phase, $n_i$ representing the number of dimeric PC-88A molecules involved in the extraction of component i. For the above reaction equation, the chemical equilibrium can be described by:

$$K_{c,i} = \left( [MR_{m_i} HR_{(2n_i - m_i)}][H^+]^{m_i} \right) / \left( [M_i^{m_i+}][(HR)_2]^{n_i} \right).$$

As a reference, a process, which is a sequential extraction process, proposed by Suzuki et al. was evaluated for the separation of the same components.

The result of the simulations is a counter-current process for separating components from a mixture comprising the three components, wherein ten stages are provided along the counter-current flow. Results of the optimization are shown in FIG. 8, which is a plot of the pH of the second, aqueous phase as dependent on the index of the stage n, with the first, organic phase entering the counter-current flow at the stage with index 1, and with the second, aqueous phase entering the counter-current flow at the stage with index 10. The accumulation regions for Co and Al are indicated by the vertical, dashed lines.

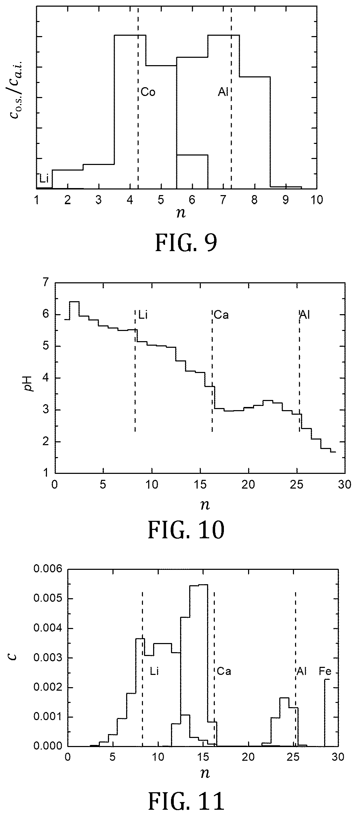

Further results are shown in FIG. 9, which is a plot of the concentration of a metal in the organic, e.g., extractant, phase, as dependent on the index of the stage n. The accumulation regions for Co and Al are indicated by the vertical, dashed lines. In FIG. 9, the concentration is provided as the concentration of a component in the organic phase at a stage $c_{o.s.}$, divided by the concentration of the component in the aqueous phase at the inlet of the aqueous phase $c_{a.i.}$, where the component is introduced into the counter-current flow. It was found by the inventor that, for withdrawal rates of 20 % of the inlet flux, an enrichment by a factor of 5 can be achieved with respect to the complete transfer of a component into the organic phase.

In this example, the pH variation has been optimized so that only base needs to be added at a plurality of locations along the counter-current flow. If a linear profile would have to be obtained, also acid would have to be added at certain stages, potentially increasing the costs of the process.

It may be observed in FIG. 8 that, in the optimized counter-current process, the sign of the variation is not always constant. Indeed, although the pH gradient is negative (so the pH is decreasing for increasing index of the stage) along most of the counter-current flow, there is an increase in pH from the stage with index 3 to the stage with index 4.

In the simulated, optimized process, the second, aqueous phase enters at the stage with index 10. Li is collected as a pure component at the stage with index 1. At none of the stages, a significant amount of Li moves into the second, organic phase. As such, in this example, the component Li has no accumulation region. As a result, the concentration of Li collected at the outlet of the second phase at the stage with index 1 is low. Alternatively, if it were preferred that Li would be collected from a phase having a higher concentration of Li, a corresponding accumulation region could be implemented along the counter-current flow.

These simulations show that a good process for separating components from a mixture comprising three components may be obtained using only ten stages, within the assumptions made. This result, of course, depends on the differences between the partition coefficient for the different components.

Since only base is added in the process, the operating costs are very similar to those of the reference process of Suzuki et al. Only small acid flows were used to strip the organic side streams taken at the sampling points for the optimized small side-stream flowrates. The continuous-flow process of this example, that is in accordance with embodiments of the present invention, may achieve purities of at least 99.85% for each of the components.

Example 3: Separation of components from a leach liquor from LiFePO$_4$ batteries

In this example, a more complex simulation is performed. This example concerns a continuous-flow process in accordance with embodiments of the present invention for separating different components from a leach liquor from LiFePO$_4$ batteries. The pH-dependence of the partition coefficient of each component has been derived from literature, and are summarized in Table A. Di(2-ethylhexyl)phosphoric acid (D2EHPA) is used as reactive extractant in the organic phase. For this more complex simulation, the same equations as mentioned above from Suzuki et al. were used, with HR now representing D2EHPA, and wherein $M_i$ is a component i selected from Fe(III), Li(I), Al(III) and Ca(II). The results have been obtained from an optimization by minimizing the acid and base injections. FIG. 10 shows the optimized pH variation of the second, aqueous phase, as dependent on the index of the stage n, and FIG. 11 shows the concentration c of each metal, in arbitrary units, at each stage n in the organic phase. Herein, the vertical, dashed line indicates the location at which the different components are ideally removed, which is the location at which the purity of each component is higher, contained in the accumulation region for each of the components. In the simulated process, the accumulation regions are well separated from each other, so that also good separation of each of the components from the mixture may be achieved. The simulation shows that also for more complex mixtures, embodiments of the present invention may result in a good separation of the different components.

Table A: Figures of merit for the different components to be separated from a mixture in the simulation of Example 3

| Component | Cost (€/kg) | $pK_c$ with D2EHPA | $n_i$ with D2EHPA | Source |
|---|---|---|---|---|
| Fe(III) | 0.8 | 0.31 | 2 | Sahu, Das |
| Li(I) | 80.2 | 5.65 | 2 | Song et al. |

(continued)

| Component | Cost (€/kg) | $pK_c$ with D2EHPA | $n_i$ with D2EHPA | Source |
|---|---|---|---|---|
| Al(III) | 2.4 | 9.58 | 4 | Nathsarma et al. |
| Ca(II) | 3.0 | 9.16 | 4 | Ren et al. |

The literature sources indicated in the last column of Table A correspond to:

K.K. Sahu, R.P. Das (1997). Synergistic Extraction of Iron(III) at Higher Concentrationsin D2EHPA-TBP Mixed Solvent Systems. Metallurgical and Materials Transactions B 28B, 181-189.
Y. Song, Z. Zhao, L. He (2020). Lithium recovery from Li3PO4 leaching liquor: Solvent extraction mechanism of saponified D2EHPA system. Separation and Purification Technology 249, 117161, 1-8.
K.C. Nathsarma, K. Sarangi, A. Mohanty, N. Devi (2022). Liquid-liquid extraction of aluminum(III) from sulphate solution by using saponified D2EHPA. Materials Today: Proceedings 67(8), 1185-1189.
X. Ren, W.Y. Lu, Q. Wei (2012). Ca(II) Extraction by D2EHPA from Calcium Lactate Solution to Produce Lactic Acid: Process and Kinetics. AASRI Procedia 3, 341-350.

Example 4: Separation of components from a leach liquor from Nd-magnets

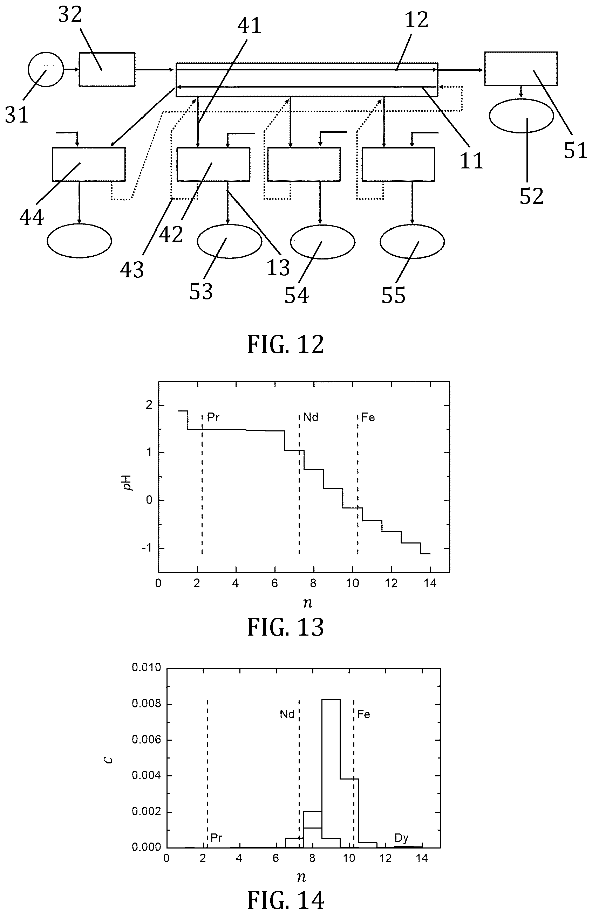

In this example the recycling of Nd-magnets has been considered, using the counter-current system shown in FIG. 12, wherein the individual stages are not shown in detail. For this more complex simulation, the same equations as mentioned above from Suzuki et al. were applied. A solid 31 comprising the metals Fe, Nd, Co, Dy, and Pr is first leached 32 to yield an aqueous phase 12 comprising ions of these metals, which is introduced into a counter-current flow, in counter-current with respect to an organic phase 11 (arrows indicate flow direction). Table B summarized figures of merit for the different components that were derived from literature.

FIG. 13 shows the optimized pH variation of the second, aqueous phase as dependent on the index of the stage n, and FIG. 14 shows the concentration of metal, in arbitrary units, in the first, organic phase, at each stage n. In this example, Fe, Nd, and Pr were accumulated at respective accumulation regions at different locations along the counter-current flow and extracted from the organic phase 11. Herein, part of the organic phase 11 is removed, at the accumulation region for a component, via a side-stream 41 towards a removal element or an extraction element 42. At the removal or extraction element 42, the component is removed from the side-stream 41 of the organic phase, by a third phase 13 that is an aqueous phase, yielding solutions of Fe 53, Nd 54, and Pr 55 in the third phase. Subsequently, the side-stream 43 from which the component was extracted is re-introduced into the first phase 11 in the counter-current flow.

In this example, Dy and Co were obtained at the ends of the counter-current flow. In particular, Dy leaves the counter-current flow in the first phase 11, and is extracted from the first phase 11 in a removal element or an extraction element 44, before said first phase 11 is recycled into the counter-current flow. Co leaves the counter-current flow in the second phase 12, from which Co is precipitated 51 by binding with hydroxide ions to yield precipitated $Co(OH)_2$ 52. In some cases, this may be the cost-optimal solution. In principle, the pH-range within the process can be extended to also provide accumulation regions for Dy and Co within the counter-current flow.

Table B: Figures of merit for the different components extracted from a mixture in Example 4

| Component | Cost (€/kg) | $pK_c$ with D2EHPA | $n_i$ with D2EHPA | Source |
|---|---|---|---|---|
| Fe(III) | 0.8 | 0.31 | 2 | Sahu et al. |
| Nd(III) | 160.1 | 1.84 | 2 | Mohammadi et al. |
| Co(II) | 52.0 | 9.57 | 2 | Sarangi et al. |
| Dy(II) | 496.6 | -2.19 | 4 | Mohammadi et al. |
| Pr(III) | 170.2 | 5.20 | 3 | Padhan et al. |

The literature sources indicated in the last column of Table B correspond to:

K.K. Sahu, R.P. Das (1997). Synergistic Extraction of Iron(III) at Higher Concentrationsin D2EHPA-TBP Mixed Solvent Systems. Metallurgical and Materials Transactions B 28B, 181-189.
M. Mohammadi, K. Forsberg, L. Kloo, J. Martinez De La Cruz, Å. Rasmuson (2015). Separation of ND(III), DY(III) and Y(III) by solvent extraction using D2EHPA and EHEHPA. Hydrometallurgy 156, 215-224.

K. Sarangi, B.R. Reddy, R.P. Das (1999). Extraction studies of cobalt (II) and nickel (II) from chloride solutions using Na-Cyanex 272.: Separation of Co(II)/Ni(II) by the sodium salts of D2EHPA, PC88A and Cyanex 272 and their mixtures. Hydrometallurgy 52(3), 253-265.

E. Padhan, K. Sarangi (2017). Recovery of Nd and Pr from NdFeB magnet leachates with bi-functional ionic liquids based on Aliquat 336 and Cyanex 272. Hydrometallurgy 167, 134-140.

Example 5: Continuous-flow process for the separation of three components from a mixture

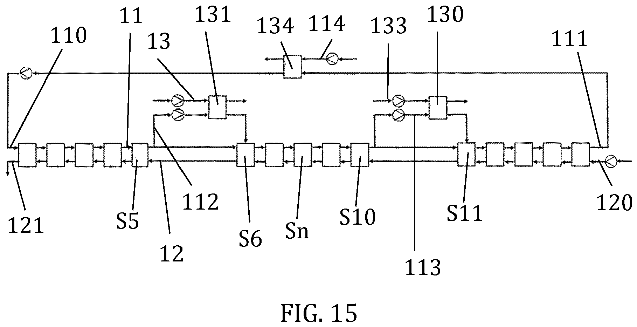

FIG. 15 is a schematic representation of a fifth example of a continuous-flow process for the separation of components from a mixture. The continuous-flow process comprises a first phase 11, that is an organic liquid, e.g., organic solvent, and a second phase 12, that is an aqueous solvent, flowing in an opposite direction with respect to each other (the arrows indicating the flow direction). An inlet 110 for the first phase 11 and an outlet 121 for the second phase 12 are provided at a first end of the counter-current flow, and an outlet 111 for the first phase 11 and an inlet 120 for the second phase 12 are provided at a second end of the counter-current flow. In this example, a mixture comprising three components, that is, three metals, are introduced together with the aqueous phase 12, through the inlet 120 for the aqueous phase 12, into the counter-current flow.

Fifteen stages Sn are provided along the counter-current flow, wherein each stage Sn is associated with a partition coefficient for each component between the first phase 11 and second phase 12 at said stage, and a first-to-second-phase flow rate ratio at said stage. The first-to-second-phase flow rate ratio is substantially equal for each stage along the counter-current flow. Typically, the volumetric flow rate is controlled by settings of a pump inducing the flow, e.g., the flow of the first phase and the flow the second phase. Alternatively, the volumetric flow rate may be as defined by, e.g., a differential pressure flow meter or a thermal flow meter. Each stage, each of which may comprise, or consist of, a mixer-settler, contains an inlet for introducing an acid or base into the counter-current flow, so as to create a variation of the partition coefficient for the component along the counter-current flow. Said acid or base is typically only soluble in the aqueous phase, and the organic phase typically contains substantially no acid or base. The pH may be as determined by using a pH probe such as a glass-probe. The pH-probe may probe the pH of the aqueous phase, that of the organic phase, or that of the mixed phases, mixed in the mixer-settler.

The first metal of the three metals is accumulated at the stages with index 10, i.e., S10, and with index 11, i.e., S11, which is therefore the accumulation region for the first metal. At these stages, the concentration of the first metal is larger than the mean concentration of the metal between the accumulation region and the inlet 120 of the second phase 12. The second metal of the three metals is accumulated at the stages with index 5, i.e., S5, and with index 6, i.e., S6, which is therefore the accumulation region for the second metal. At these stages, the concentration of the second metal is larger than the mean concentration of the metal between the accumulation region and the inlet 120 of the second phase 12. The accumulation regions for the first and second metal are, thereby, separated from each other by three stages.

The third metal is not accumulated within the counter-current flow, but, instead, may leave the counter-current flow, together with the second phase 12, through the outlet 121 of the second phase 12. As the first and second metal have been removed from the second phase 12 within the counter-current flow, the aqueous phase 12 leaving through the outlet 121 only contains the third metal. The third metal may, subsequently, be precipitated from the second phase 12, or the second phase 12 may be evaporated, thereby obtaining the third metal.

Between the tenth stage S10 and the eleventh stage S11, part of the first phase 11 is diverted from the counter-current flow into a side-stream 113, where the first metal is removed from the counter-current flow by extraction from the diverted first phase by a third phase 133, which may be performed using a further mixer-settler 130. The remaining side-stream 113 is, subsequently, re-introduced in the counter-current flow by injection of the side-stream at the eleventh stage 511.

Between the fifth stage S5 and the sixth stage S6, part of the first phase 11 is diverted from the counter-current flow into a side-stream 112, where the second metal is removed from the counter-current flow by extraction from the diverted first phase by a third phase 13, which may be performed using a further mixer-settler 131. The remaining side-stream 112 is, subsequently, re-introduced in the counter-current flow by injection of the side-stream at the sixth stage S6.

In this example, the third phase 133 for separating the first metal from the side-stream 113 may be the same as or different than the third phase 13 for separating the second metal from the side-stream 112.

The first, organic phase 11 is removed from the counter-current flow through the outlet 111 for the first phase 11. In this example, the third metal, or, alternatively, any other metal or any different contamination, that may be present in the first, organic phase 11 at said outlet 111 may, subsequently, be removed by, for example, extraction into a fourth phase 114, e.g., water, in a further mixer-settler 134. Subsequently, the first, organic phase 11 may be re-introduced into the counter-current flow through the inlet 110 for the first, organic phase 11, thereby effectively recycling the organic phase 11.

To determine a concentration of a component in a phase, any technique known in the art may be used. For example, UV/vis spectrophotometry may be used, e.g., on a fraction of the first or second phase removed at a particular point along the counter-current flow, or when still present in the counter-current flow. When the components are metals, suitable reagents for each metal may be added. For example, for iron, aluminum, and cobalt, such reagents are directly available with the available DR3900 model Hach UV/vis-spectrophotometer. For example, $Fe^{3+}$ can be analyzed using FerroZine Reagent Solution. For the spectrophotometric determination of all metal cations including $Li^+$ and $Nd^{3+}$ corresponding reagents have been proposed in the literature like 1,10-phenanthroline, arsenazo (III), thorin, alizarin red S. Alternative options for analysis are titrations or, especially for complex cation mixtures, ion chromatography. Alternatively, a volume of the phase may be removed and the phase may be evaporated, wherein the residue comprising the component may be analyzed using Rutherford Backscattering Spectroscopy from which the amount of the component may be determined. Dividing said amount by the volume may yield the concentration of the component as well.

Typically, the flux of each component in a phase may be assumed to be equal to the volumetric flow rate of the phase (e.g., in volume/period of time) multiplied by the molar density, or concentration (e.g., in mole/volume), of the component in the phase.

It is to be understood that although preferred embodiments, specific constructions and configurations, as well as materials, have been discussed herein for devices according to the present invention, various changes or modifications in form and detail may be made without departing from the scope of this invention. For example, any formulas given above are merely representative of procedures that may be used. Steps may be added or deleted to methods described within the scope of the present invention.

**Claims**

1. A continuous-flow process for separating at least one component (21, 22, 23) from a mixture of components, comprising:

    a) providing the mixture in a counter-current flow comprising a first phase (11) flowing in an opposite direction with respect to a second phase (12), the first phase (11) being immiscible with and/or separated from the second phase (12),

        wherein a plurality of stages (Sn) are provided along the counter-current flow for exchanging the at least one component (21, 22, 23) between the first (11) and second phase (12), each stage (Sn) being associated with:

            a partition coefficient for each of the at least one component (21, 22, 23) between the first (11) and second phase (12), and
            a first-to-second-phase flow rate ratio,

        wherein the counter-current flow comprises, for each of the at least one component, an accumulation region (Sa), wherein the partition coefficient and/or the flow rate ratio of stages (Sn) at opposite sides of the accumulation region (Sa) are adapted for inducing, at each of said stages (Sn), a net flux of the component (21, 22, 23) along the counter-current flow, corresponding to a difference between a flux of the component (21, 22, 23) in the first phase (11) and a flux of the component (21, 22, 23) in the second phase (12) at said stage (Sn), such that the direction of said net flux is opposite for stages (Sn) at opposite sides of the accumulation region (Sa) and, for each of said stages (Sn), pointing towards the accumulation region (Sa), so as to accumulate the component (21, 22, 23) at the accumulation region (Sa), and

    b) removing each of the at least one component (21, 22, 23) from the counter-current flow by removing the component (21, 22, 23) from the respective accumulation region (Sa).

2. The continuous-flow process of claim 1, further comprising providing the counter-current flow, wherein providing the counter-current flow comprises providing the first phase (11) being an organic phase and the second phase (12) being an aqueous phase.

3. The continuous-flow process of claim 2, wherein providing the mixture in the counter-current flow comprises providing the mixture in the aqueous phase (12).

4. The continuous-flow process of claim 2 or 3, wherein removing each of the at least one component (21, 22, 23) from the counter-current flow comprises removing each of the at least one component (21, 22, 23) from the organic phase (11).

5. The continuous-flow process of any one of the previous claims, comprising providing a variation of the partition coefficient for each component (21, 22, 23) along the counter-current flow.

6. The continuous-flow process of claim 5, wherein providing the variation of the partition coefficient comprises introducing an acid or base into the counter-current flow in order to provide a variation of the pH along the counter-current flow.

7. The continuous-flow process of any one of the previous claims, wherein at least two components are separated.

8. The continuous-flow process of claim 7, wherein consecutive accumulation regions (Sa) for different components (21, 22, 23) are separated from each other by at least three stages (Sn), more preferably by at least five stages (Sn).

9. The continuous-flow process of any one of the previous claims, wherein each stage (Sn) comprises a mixer-settler.

10. The continuous-flow process of any one of the previous claims, wherein the mixture comprises different metallic elements, wherein each of the at least one component (21, 22, 23) to be separated is a metallic element.

11. The continuous-flow process of any one of the previous claims, wherein the counter-current flow comprises a variation along the counter-current flow of a variable equal to the partition coefficient of each component (21, 22, 23), being a ratio of a molar concentration of the component (21, 22, 23) in the first phase (11) to a molar concentration of the component (21, 22, 23) in the second phase (12), multiplied by the first-to-second-phase volumetric flow rate ratio, wherein the accumulation region (Sa) for each component (21, 22, 23) comprises the location along the counter-current flow at which said variable crosses unity for said component (21, 22, 23).

12. The continuous-flow process of any one of the previous claims, wherein removing each of the at least one component (21, 22, 23) from the counter-current flow is performed using an extraction process from the first phase (11) by a third phase.

13. A continuous-flow system (1) for separating at least one component (21, 22, 23) from a mixture thereof, the system comprising:

   a) a counter-current flow setup comprising a fluidic channel for flowing a first phase (11) in an opposite direction with respect to a second phase (12) flowing in a fluidic channel, comprising a plurality of stages (Sn) along the counter-current flow setup for exchanging the at least one component between the first (11) and second phase (12), wherein the continuous-flow system (1) is adapted for providing each stage (Sn) with:

   a partition coefficient for each component (21, 22, 23) between the first (11) and second phase (12), and a first-to-second-phase flow rate ratio,

   so that the partition coefficient and/or the flow rate ratio at different stages (Sn) along the counter-current flow setup are adapted for inducing, for the component (21, 22, 23) at each of said stages (Sn), a net flux of the component (21, 22, 23) along the counter-current flow, corresponding to a difference between a flux of the component (21, 22, 23) in the first phase (11) and a flux of the component in the second phase (12) at said stage (Sn), such that the direction of said net flux is opposite for stages (Sn) at opposite sides of an accumulation region (Sa) for said component (21, 22, 23) and, for each of said stages (Sn), pointing towards said accumulation region (Sa), so as to accumulate the component (21, 22, 23) at the accumulation region (Sa), and
   b) means for removing each of the at least one component (21, 22, 23) from the counter-current flow by removing the component (21, 22, 23) from the respective accumulation region (Sa).

FIG. 1A

FIG. 1B

FIG. 2

FIG. 3

FIG. 4

FIG. 5

FIG. 6

FIG. 7

FIG. 8

FIG. 9

FIG. 10

FIG. 11

EP 4 491 254 A1

FIG. 12

FIG. 13

FIG. 14

FIG. 15

Europäisches
Patentamt

European
Patent Office

Office européen
des brevets

# EUROPEAN SEARCH REPORT

Application Number

EP 23 18 5607

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 649 030 A (JOUBERT PHILIPPE [FR]) 10 March 1987 (1987-03-10) * claims; figure 1; examples * * column 5, lines 15-20, 29-35 * | 1-13 | INV. B01D11/04 C22B3/26 |
| X | Srivastava Vaibhav Kumar: "MODELING OF RARE EARTH SOLVENT EXTRACTION PROCESS FOR FLOWSHEET DESIGN AND OPTIMIZATION", Theses and Dissertations--Mining Engineering, 17 June 2022 (2022-06-17), pages 1-214, XP093112621, Kentucky DOI: 10.13023/etd.2021.220 Retrieved from the Internet: URL:https://uknowledge.uky.edu/mng_etds/62 * figures 5.1, 5.3, 5.6, 6.2, 6.3, 6.8, 6.15, 7.6-7.8, 7.10 * * section 2.3.3 * * section 4.3 * * section 6.3 * * figure 7.11 * | 1-13 | |

TECHNICAL FIELDS SEARCHED (IPC)

B01D
C22B

The present search report has been drawn up for all claims

| Place of search | Date of completion of the search | Examiner |
|---|---|---|
| Munich | 18 December 2023 | Retucci, Lisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 18 5607**

This annex lists the patent family members relating to the patent documents cited in the above-mentioned European search report.
The members are as contained in the European Patent Office EDP file on
The European Patent Office is in no way liable for these particulars which are merely given for the purpose of information.

**18-12-2023**

| Patent document cited in search report | | Publication date | Patent family member(s) | | Publication date |
|---|---|---|---|---|---|
| US 4649030 | A | 10-03-1987 | AU | 565968 B2 | 01-10-1987 |
| | | | FR | 2547208 A1 | 14-12-1984 |
| | | | IT | 1176264 B | 18-08-1987 |
| | | | OA | 07718 A | 30-08-1985 |
| | | | US | 4649030 A | 10-03-1987 |
| | | | ZA | 844210 B | 27-02-1985 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SUZUKI**. *Separation and Purification Technology*, vol. 98, 396-401
- **K.K. SAHU** ; **R.P. DA**. Synergistic Extraction of Iron(III) at Higher Concentrationsin D2EHPA-TBP Mixed Solvent Systems. *Metallurgical and Materials Transactions B 28B*, 1997, 181-189
- **Y. SONG** ; **Z. ZHAO** ; **L. HE**. Lithium recovery from Li3PO4 leaching liquor: Solvent extraction mechanism of saponified D2EHPA system. *Separation and Purification Technology*, 2020, vol. 249 (117161), 1-8
- **K.C. NATHSARMA** ; **K. SARANGI** ; **A. MOHANTY** ; **N. DEVI**. Liquid-liquid extraction of aluminum(III) from sulphate solution by using saponified D2EHPA. *Materials Today: Proceedings*, 2022, vol. 67 (8), 1185-1189
- **X. REN** ; **W.Y. LU** ; **Q. WEI**. Ca(II) Extraction by D2EHPA from Calcium Lactate Solution to Produce Lactic Acid: Process and Kinetics. *AASRI Procedia*, 2012, vol. 3, 341-350
- **K.K. SAHU** ; **R.P. DAS**. Synergistic Extraction of Iron(III) at Higher Concentrationsin D2EHPA-TBP Mixed Solvent Systems.. *Metallurgical and Materials Transactions B 28B*, 1997, 181-189
- **M. MOHAMMADI** ; **K. FORSBERG** ; **L. KLOO** ; **J. MARTINEZ DE LA CRUZ** ; **Å. RASMUSON**. Separation of ND(III), DY(III) and Y(III) by solvent extraction using D2EHPA and EHEHPA. *Hydrometallurgy*, 2015, vol. 156, 215-224
- **K. SARANGI** ; **B.R. REDDY** ; **R.P. DAS**. Extraction studies of cobalt (II) and nickel (II) from chloride solutions using Na-Cyanex 272.: Separation of Co(II)/Ni(II) by the sodium salts of D2EHPA, PC88A and Cyanex 272 and their mixtures. *Hydrometallurgy*, 1999, vol. 52 (3), 253-265
- **E. PADHAN** ; **K. SARANGI**. Recovery of Nd and Pr from NdFeB magnet leachates with bi-functional ionic liquids based on Aliquat 336 and Cyanex 272. *Hydrometallurgy*, 2017, vol. 167, 134-140